# EUROPEAN PATENT APPLICATION

(11) **EP 4 814 725 A1**
(43) Date of publication of application: **30.09.2026**
(21) Application number: 24892575.2
(22) Date of filing: 02.01.2024
(51) Int. Cl.: G06F 11/36

(54) **SOFTWARE QUALITY DETECTION METHOD AND SYSTEM, AND STORAGE MEDIUM**

(30) Priority: 23.11.2023 CN 202311575155
(71) Applicant: JIANGSU XCMG STATE KEY LABORATORY TECHNOLOGY CO., LTD., Xuzhou Jiangsu 221004 (CN)
(72) Inventor: WANG, Bin, Xuzhou, Jiangsu 221004 (CN); LI, Hanshuang, Xuzhou, Jiangsu 221004 (CN); YUAN, Guowei, Xuzhou, Jiangsu 221004 (CN); WANG, Meina, Xuzhou, Jiangsu 221004 (CN); LI, Yang, Xuzhou, Jiangsu 221004 (CN)
(74) Representative: Specht, Peter
(86) International application number: PCT/CN2024/070085
(87) International publication number: WO 2025/107406

(57) **Abstract**

The present disclosure discloses a software quality detection method, a system and a storage medium, which relates to the field of software design. The method comprises: analyzing software program source code to construct a control flow graph, a procedure-level call graph, and a file-level call graph; extracting a plurality of metrics based on the software program source code, the control flow graph, the procedure-level call graph, and the file-level call graph; obtaining internal and external indicators related to software quality detection using a plurality of measurement functions based on the plurality of metrics; and detecting software quality based on the internal and external indicators.

## Description

### CROSS-REFERENCE TO RELATED APPLICATIONS

The present disclosure is based on and claims priority of Chinese application for invention 202311575155.3, filed on November 23, 2023, the disclosure of which is hereby incorporated into this disclosure by reference in its entirety.

### TECHNICAL FIELD

This disclosure relates to the field of software design, particularly to a software quality detection method, a system, and a storage medium.

### BACKGROUND

Research on software design quality assessment has always been a core focus of software engineering development, a key step in software development, and a bridge between software requirements and software implementation. The quality of software design directly affects the quality of the final developed software product. High-quality software design can not only meet users' functional and non-functional needs but also make the subsequent software implementation more efficient and of higher quality. On the contrary, low-quality software design can have direct consequences, such as the final software product not meeting user needs, and even cause serious quality problems, such as functional bugs, poor performance, security risks, and difficulty in maintenance and enhancement. By assessing software design quality, development teams can better understand, evaluate, and improve their software design to ensure the quality of the final product.

The field of software design quality assessment is an important branch of software engineering. With the development and popularization of software technology, software design quality evaluation techniques are constantly evolving and advancing. Software design quality assessment begins in the early stages of software engineering. In the 1970s and 1980s, pioneers of software engineering began to focus on how to design better quality software. Early methods mainly focused on software architecture, modularity, and design principles such as structured design and object-oriented design. In the late 1980s and early 1990s, quality models such as ISO 9126 were introduced to define and measure different aspects of software quality, such as functionality, maintainability, performance, etc. These models provide a systematic approach for software design quality assessment. With the advancement of computer technology, many automated tools and static analysis tools have emerged to analyze and evaluate the quality of software design. These tools can identify code quality issues, potential bugs, and performance bottlenecks, helping developers find and fix problems earlier.

The way software design quality is assessed has changed with the rise of agile development methods. Agile methods emphasize rapid iteration and feedback, making quality assessment a part of the development process rather than a later activity. Continuous Integration and Continuous Delivery (CI/CD) practices have also facilitated the automation and integration of quality assessment. With the development of artificial intelligence technology, machine learning and artificial intelligence are being used for software design quality assessment, such as automated code review, defect detection, and performance analysis. These technologies can accelerate and improve the quality assessment process. In general, the field of software design quality assessment continues to evolve with the development of software engineering and the emergence of new technologies. It has evolved from the initial structured design and quality models to the integration of modern technologies such as automation tools, agile development, DevOps (Development+Operations), machine learning, etc. The goal of this area is to ensure the development of high quality, maintainable, and secure software that meets the ever-changing needs of users and the marketplace.

### SUMMARY

According to one aspect of this disclosure, there is provided a software quality detection method, comprising: analyzing software program source code to construct a control flow graph, a procedure-level call graph, and a file-level call graph; extracting a plurality of metrics based on the software program source code, the control flow graph, the procedure-level call graph, and the file-level call graph; obtaining internal indicator and external indicator related to software quality detection using a plurality of measurement functions based on the plurality of metrics; and detecting software quality based on the internal indicator and external indicator.

In some embodiments, constructing the control flow graph comprises: generating an intermediate control flow graph based on the software program source code; and replacing node contents in the intermediate control flow graph with the software program source code, and adding conversion control conditions on edges in the intermediate control flow graph to generate the control flow graph.

In some embodiments, constructing the procedure-level call graph comprises: constructing an abstract syntax tree based on the software program source code; searching for function declaration nodes in the abstract syntax tree to obtain function declaration information of each function, and searching for function call nodes to obtain function call information of the each function; constructing a unique identifier of the each function based on the function declaration information of the each function; constructing each function node based on the unique identifier of the each function; and constructing the procedure-level call graph based on the each function node and the function call information of the each function.

In some embodiments, constructing the file-level call graph comprises: obtaining file nodes based on function nodes belonging to a same file in the procedure-level call graph; obtaining file call information based on the function call information of the each function in the file nodes; and constructing the file-level call graph based on the file call information.

In some embodiments, the plurality of metrics comprise one or more of a first function number in the software, a second function number of functions with annotations, an out-degree and an in-degree of the each function, an interface number, a third function number of smelly functions, and a file number.

In some embodiments, the internal indicator comprises at least one of a modifiability indicator, a scalability indicator, a testability indicator, a replaceability indicator, or an understandability indicator; and the external indicator comprises at least one of a code smell rate indicator or a defect rate indicator.

In some embodiments, obtaining the modifiability indicator comprises: obtaining a number of other functions associated with the each function based on a sum of the out-degree and the in-degree of the each function; and obtaining the modifiability indicator based on a sum of the number of other functions associated with the each function, and the first function number.

In some embodiments, obtaining the scalability indicator comprises: obtaining the scalability indicator based on a ratio of the interface number to the first function number.

In some embodiments, obtaining the testability indicator comprises: adding up the out-degrees of the each function to obtain a number of other functions that need to be called to test all the functions; and obtaining the testability indicator based on the number of other functions that need to be called to test all the functions and the first function number.

In some embodiments, obtaining the replaceability indicator comprises: obtaining a replaceability of the each function based on the in-degree of the each function; and obtaining the replaceability indicator based on a sum of the replaceabilities of the each function and the first function number.

In some embodiments, obtaining the understandability indicator comprises: obtaining the understandability indicator based on a ratio of the second function number to the first function number.

In some embodiments, obtaining the code smell rate indicator comprises: obtaining the code smell rate indicator based on a ratio of the third function number to the first function number.

In some embodiments, the defect rate comprises at least one of a rate of defects per thousand lines, a defect density, a file pass rate, or a function pass rate.

In some embodiments, a defect detection result is obtained, wherein obtaining the defect rate comprises at least one of: obtaining the rate of defects per thousand lines based on a number of defects in the defect detection result; obtaining the defect density based on a number of defects of each defect type and a weight of the each defect type in the defect detection result; obtaining a file defect rate based on a ratio of a number of files with defects in the defect detection result to the file number; or obtaining a function defect rate based on a ratio of a number of functions with defects in the defect detection result to the first function number.

In some embodiments, extracting the plurality of metrics comprises: obtaining the first function number and the second function number based on the software program source code; obtaining the out-degree and in-degree of the each function based on the procedure-level call graph; obtaining the interface number and the file number based on the file-level call graph; and obtaining the third function number based on the software program source code, the control flow graph, the procedure-level call graph, and the file-level call graph.

In some embodiments, extracting the plurality of metrics based on the software program source code comprises: extracting information from the software program source code based on AST-Matcher rules to obtain the plurality of metrics.

According to another aspect of this disclosure, there is further provided a software quality detection system, comprising: a design recovery module configured to analyze software program source code to construct a control flow graph, a procedure-level call graph, and a file-level call graph; an information extraction module configured to extract a plurality of metrics based on the software program source code, the control flow graph, the procedure-level call graph, and the file-level call graph; an indicator acquisition module configured to obtain internal indicator and external indicator related to software quality detection using a plurality of measurement functions based on the plurality of metrics; and a quality detection module configured to inspect software quality based on the internal indicator and external indicator.

According to another aspect of this disclosure, there is further provided a software quality detection system, comprising: a memory; and a processor coupled to the memory, the processor configured to perform the software quality detection method described above based on instructions stored in the memory.

According to another aspect of the present disclosure, there is further provided a computer-readable storage medium stored thereon computer program instructions that, when executed by a processor, implement the software quality detection method described above.

Other features and advantages of the present invention will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a flowchart of a software quality detection method according to some embodiments of the present disclosure;
FIG. 2 is a flowchart of a software quality detection method according to other embodiments of the present disclosure;
FIG. 3 is a flowchart of a software quality detection method according to still other embodiments of the present disclosure;
FIG. 4 is a flowchart of a software quality detection method according to further embodiments of the present disclosure;
FIG. 5 is a schematic structure diagram of a software quality detection system according to some embodiments of the present disclosure;
FIG. 6 is a schematic structure diagram of a software quality detection system according to other embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as a limitation to the invention, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

For a clear understanding of the object of the present disclosure, its technical solution and advantages, the present disclosure will be further described in detail below in conjunction with the accompanying drawings and embodiments.

In related technologies, the prerequisite for using the expected quality assessment method for source code generated based on class representations (such as UML class diagrams) is a complete and correct class representation. However, in practical situations, it is almost impossible to obtain complete and correct UML diagrams, so the practicality of this method is debatable. However, analyzing and evaluating software quality from the perspective of call relationships has a certain degree of one-sidedness, and cannot fully utilize source code information for comprehensive assessment. The software quality assessment method using specific software reverse engineering (SRE) tools cannot effectively collect static cohesion data if these specific SRE tools are not available or applicable to specific software systems. Additionally, focusing on cohesion assessment might lead to the neglect of other software quality attributes, resulting in a limited scope of applicability.

Quality models, static code analysis, and software reverse engineering will be explained below.

In software design quality assessment, quality models are a systematic approach used to define, measure, and evaluate various aspects of software quality. These models help development teams and stakeholders clarify the quality attributes that software should have in order to ensure that the software meets these requirements during the design and implementation phases. A widely used quality model is ISO 25010, which defines multiple aspects of software quality. The ISO 25010 quality model divides software quality into two primary categories: internal quality and external quality. Internal quality refers to the quality of internal features of software, which is usually only visible during the software development and testing process. External quality refers to the quality of software features that users can observe and experience. These internal and external quality sub-features can be further broken down into more specific features and criteria to help development teams more finely evaluate and improve the quality of software design. The quality model provides a universal framework for developing specific quality goals and indicators based on project and organizational requirements, and for continuously monitoring and evaluating software quality during the development process. This ensures that the software meets the expected degree of user requirements, performance, maintainability, and security.

Static code analysis is an important software design quality assessment technique that identifies potential problems, bugs, and defects by analyzing the text of the source code without running the program. This analysis can help development teams identify problems before code is executed to improve software quality, maintainability, and reliability. Static code analysis helps ensure that code meets coding standards and compliance requirements, and analysis tools can run automatically, which improves efficiency, especially for large code repositories. Static code analysis also has certain limitations, and cannot completely replace manual code review and testing because it cannot catch all types of problems. Static code analysis tools can generate false positives that require manual verification and fixing.

Software reverse engineering is the process of parsing and analyzing existing software systems, programs, or components to determine their internal structure, algorithms, design principles, and other information. Reverse engineering is commonly used to understand, review, improve, or redesign software, and can also be used to discover and fix defects or security vulnerabilities in software.

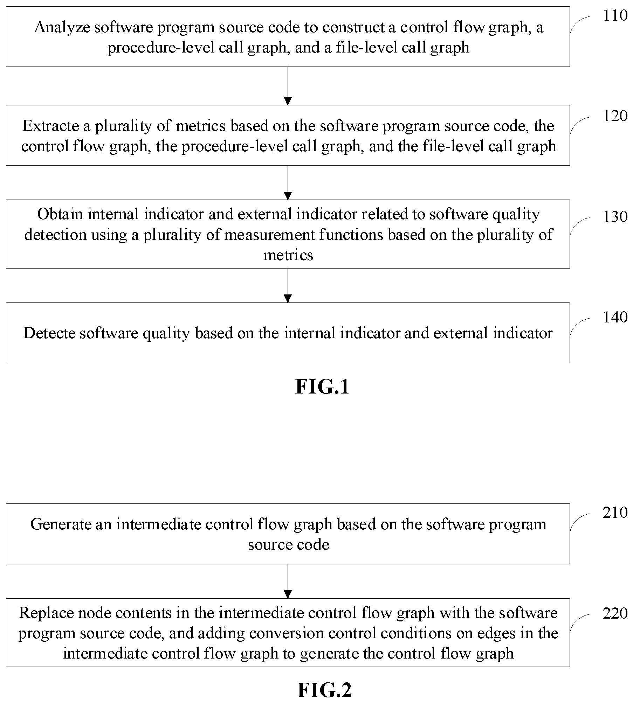

FIG. 1 is a flowchart of a software quality detection method according to some embodiments of the present disclosure.

In step 110, software program source code is analyzed to construct a control flow graph, a procedure-level call graph, and a file-level call graph.

In some embodiments, the software program source code is source code in C, C++, and a mixture of C and C++ languages.

In some embodiments, the software program source code is analyzed to identify program design structures, such as sequential structures, various selection structures, various loop structures, etc., and then a control flow graph (CFG) and a call graph (CG) are constructed, the call graph including a procedure-level call graph (PLCG) and a file-level call graph (FLCG).

In some embodiments, the control flow graph is a directed graph G = (V, E), where V is the set of vertices and E is the set of directed edges. In the control flow graph, each vertex represents a basic block, which is a linear sequence of program instructions with an entry point (the first instruction executed) and an exit point (the last instruction executed), and the directed edges represent control flow paths.

In some embodiments, the call graph represents call relationships between subprograms in a software system. Each node represents a procedure, and each edge (f, g) represents that procedure f calls procedure g. In the procedure-level call graph, each node represents a function in a C program, and each edge represents a call relationship between functions. In the file-level call graph, each node represents a file in a C language project, and each edge represents a call relationship between two files.

In step 120, a plurality of metrics are extracted based on the software program source code, the control flow graph, the procedure-level call graph, and the file-level call graph.

In some embodiments, information extraction is performed on the software program source code based on AST-Matcher rules to obtain the plurality of metrics. The core of extracting source code information based on AST-Matcher rules is to write different query rules for different information in the software program source code, which can improve the accuracy of model instantiation and reverse engineering, thereby enhancing the reliability of subsequent assessment result and reducing possible errors and error rates.

In some embodiments, design diagram information is extracted based on the control flow graph, the procedure-level call graph, and the file-level call graph recovered from the source code.

In some embodiments, the plurality of metrics include a first function number in the software, a second function number of functions with annotations, an out-degree and an in-degree of each function, an interface number, a third function number of smelly functions, and a file number, etc.

For example, the first function number and the second function number are obtained based on the software program source code; the out-degree and in-degree of the each function are obtained based on the procedure-level call graph; the interface number and the file number are obtained based on the file-level call graph; and the third function number is obtained based on the software program source code, the control flow graph, the procedure-level call graph, and the file-level call graph.

In step 130, internal indicator and external indicator related to software quality detection are obtained using a plurality of measurement functions based on the plurality of metrics.

In some embodiments, software design quality is assessed from both internal and external aspects, wherein internal indicators refer to indicators at the structural level of the design, including synergy between design and code and the ability of the design to adapt to evolutionary activities; the external indicators refer to the indicators at the behavioral level of the design, which measure the performance of the design.

For example, the internal indicators include a modifiability indicator, a scalability indicators, a testability indicator, a replaceability indicator, an understandability indicator, etc., while the external indicators include a code smell rate indicator and a defect rate indicator, etc.

In step 140, software quality is detected based on the internal indicator and the external indicator.

In this step, the software design quality is comprehensively evaluated from both internal and external aspects. Based on the evaluation, it is determined whether the software design meets some expected quality standards, and if not, software design refactoring is performed.

Different indicators can be selected for different projects to determine whether the software quality is qualified. For example, if at least one of the modifiability indicator, the scalability indicator, the testability indicator, the replaceability indicator, the understandability indicator, the code smell rate indicator, or the defect rate does not meet the project requirements, it indicates that the software quality is not qualified. In this case, the software design can be refactored, which not only helps to understand and analyze the design of the existing project, but also provides strong guidance for improving and optimizing the software design.

In the above embodiments, software design structures can be identified without the need for specific SRE tools, and then internal and external indicators related to software quality detection can be extracted from the source code and software design structures. Software quality is comprehensively assessed in both internal and external aspects, thereby improving the universality and comprehensiveness of software quality detection.

FIG. 2 is a flowchart of a software quality detection method according to other embodiments of the present disclosure.

In step 210, an intermediate control flow graph is generated based on the software program source code.

In some embodiments, Clang's CFG generation tool is used to analyze the software program source code to generate the intermediate CFG. This intermediate CFG, represented by the compiler's symbolic identifiers, needs to be processed into a source-level control flow graph.

In step 220, node contents in the intermediate control flow graph are replaced with the software program source code, and conversion control conditions are added on edges in the intermediate CFG to generate the control flow graph.

In this step, the information in the nodes of the intermediate CFG is processed and the node contents are replaced with the source code. Finally, branch conditions are added to the intermediate CFG to achieve the recovery of the control flow graph. This implementation process is not limited by specific SRE tools, and has greater universality. There is no need to pay attention to the development tools and environments used by the software, and it can be applied to a wider range of software systems.

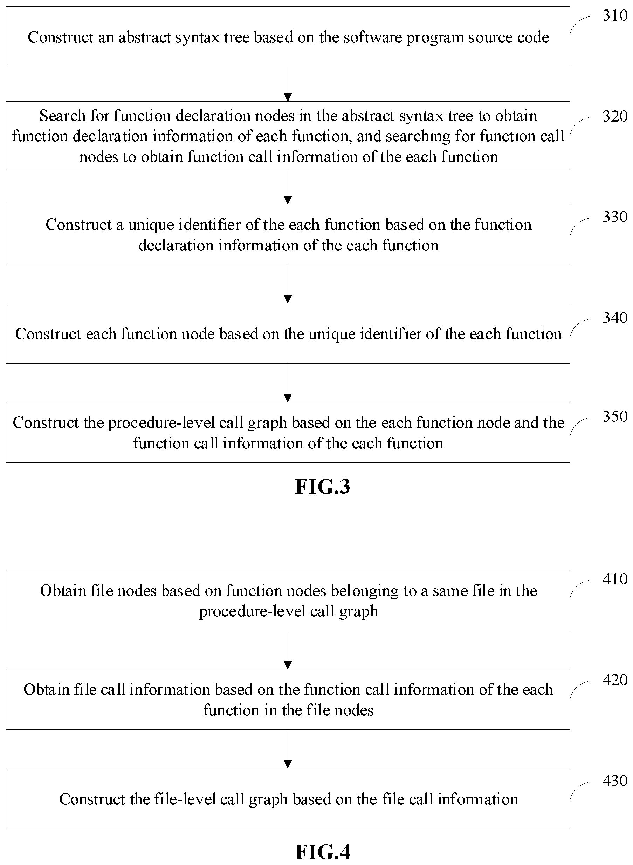

FIG. 3 is a flowchart of a software quality detection method according to still other embodiments of the present disclosure.

In step 310, an abstract syntax tree is constructed based on the software program source code.

In some embodiments, the abstract syntax tree is constructed using Clang.

In step 320, function declaration nodes in the abstract syntax tree are searched to obtain function declaration information of each function, and function call nodes are searched to obtain function call information of the each function.

In some embodiments, ASTMatcher is used to search for function declaration nodes and function invocation nodes in the abstract syntax tree. In this step, different query rules are written for different information in the software program source code, which can obtain function declaration information and function call information, improve the accuracy of model instantiation, increase the reliability of subsequent assessment results, and reduce possible errors and error rates.

In step 330, a unique identifier of the each function is constructed based on the function declaration information of the each function.

In some embodiments, the unique identifier is, for example, file name + function name.

In step 340, each function node is constructed based on the unique identifier of the each function.

In step 350, the procedure-level call graph is constructed based on the each function node and the function call information of the each function.

In this embodiment, the construction of the procedure-level call graph can be achieved without the need for specific SRE tools.

FIG. 4 is a flowchart of a software quality detection method according to further embodiments of the present disclosure.

In step 410, file nodes are obtained based on function nodes belonging to a same file in the procedure-level call graph.

The procedure-level call graph is a fine-grained call graph, and the file-level call graph is a coarse-grained call graph. The procedure-level call graph contains a plurality of function nodes. File nodes are obtained by analyzing at the file granularity level.

In step 420, file call information is obtained based on the function call information of the each function in the file nodes.

In step 430, the file-level call graph is constructed based on the file call information.

In this embodiment, the construction of the file-level call graph can be achieved without the need for specific SRE tools.

In the above embodiments, there is no need for the project to provide relevant design diagram information. Instead, the software program source code is used to construct the control flow graph, the procedure-level call graph, and the file-level call graph, which improves the integrity and correctness of the recovered software design and facilitates a comprehensive assessment of the software design quality.

In some embodiments of this disclosure, not only can the quality of the design structure be assessed, but the quality of the design behavior performance can also be assessed. In the calculation of software quality assessment, all indicators are set at the functional level of granularity. A comprehensive review of the software design provides a more complete and thorough assessment.

In some embodiments, an a number of other functions associated with the each function is obtained based on a sum of the out-degree and the in-degree of the each function; the modifiability indicator is obtained based on a sum of the number of other functions associated with the each function and the first function number.

For example, a modifiability indicator ***X*1** is obtained using a function $X 1 = 1 - \frac{{\sum }_{i = 1}^{N} \frac{O {D}_{i} + I {D}_{i}}{N}}{N}$, where ***ODᵢ*** is the out-degree of the function ***i, i*** is a natural number, ***IDᵢ*** is the in-degree of the function ***i,*** and ***N*** is the number of functions in the software, that is, the first function number. ***ODᵢ + IDᵢ*** calculates the sum of the functions associated with a given function in the call graph. The more other functions the given function is associated with, the greater the impact on other functions that must be considered when modifying the given function, indicating that modifying the given function is more difficult. $\frac{{\sum }_{i = 1}^{N} \frac{O {D}_{i} + I {D}_{i}}{N}}{N}$ represents the average value of all functions in the entire system. The smaller the value, the better the modifiability of the functions of the system. The larger the value of $1 - \frac{{\sum }_{i = 1}^{N} \frac{O {D}_{i} + I {D}_{i}}{N}}{N}$, the better the modifiability of the functions of the system.

In this embodiment, the modifiability indicator measures the difficulty of modifying the software design, specifically the difficulty of implementing software correction and improvement activities. The higher the value of the indicator, the lower the implementation difficulty.

In some embodiments, the scalability metric is obtained based on a ratio of the interface number to the first function number.

For example, a scalability metric ***X*2** is obtained using a function $X 2 = \frac{{N}_{API}}{N}$, where ***N_{API}*** is the number of APIs (Application Programming Interfaces) in the software and N is the number of functions in the software. In this embodiment, the greater the proportion of APIs, the better the external scalability of the system.

In this embodiment, the scalability indicator measures the difficulty of extending the software design, and the higher the indicator value, the lower the difficulty in extension.

In some embodiments, the out-degrees of the each function are added up to obtain the number of other functions that need to be called to test all the functions; and the testability indicator is obtained based on the number of other functions that need to be called to test all the functions and the first function number.

For example, a testability indicator ***X*3** can be obtained using the function $X 3 = 1 - \frac{{\sum }_{i = 1}^{N} \frac{O {D}_{i}}{N}}{N}$, where ***ODᵢ*** is the out-degree of function ***i*** and ***N*** is the number of functions in the software. The greater the out-degree ***ODᵢ*** of a function, the more other functions must be called to test the function, making testing relatively difficult.

In this embodiment, the testability indicator measures the difficulty of testing the software design; the greater the metric value, the less difficult the testing.

In some embodiments, a replaceability of the each function is obtained based on the in-degree of the each function; and the replaceability indicator is obtained based on a sum of the replaceabilities of the each function and the first function number.

For example, a replaceability indicator ***X*4** is obtained using the function $X 4 = \frac{{\sum }_{i = 1}^{N} {R}_{i}}{N}$, where ${R}_{i} = \frac{1}{1 + I {D}_{i}}$, ***Dᵢ*** is the out-degree of function ***i, N*** is the number of functions in the software, and ***Rᵢ*** is the replaceability of function ***i*.** The smaller the in-degree of a function, the fewer other functions call the function, and the higher the value of ***Rᵢ*,** the better the replaceability of the function.

In this embodiment, the replaceability indicator measures the difficulty of replacing functions in the software with functions that have similar functionalities, as well as the difficulty of deleting specific functions. The higher the value of the indicator, the lower the difficulty of replacement/deletion.

In some embodiments, the understandability indicator is obtained based on a ratio of the second function number to the first function number.

For example, an understandability metric ***X*5** is obtained using the function $X 5 = \frac{{N}_{comment}}{N}$***,*** where ***N_{comment}*** is the number of functions that contain comments, ***N*** is the number of functions in the software, and the more functions that contain comments there are, the relatively easier it is to understand.

In this embodiment, the understandability indicator measures the level of difficulty developers have in understanding the software and existing engineering files. The higher the value, the easier the software and engineering files are to understand, which is more conducive to developers performing evolutionary activities.

In some embodiments, the code smell rate indicator is obtained based on a ratio of the third function number to the first function number.

For example, a code smell rate indicator ***X*6** is obtained using a function $X 6 = \frac{{N}_{bad}}{N}$, where ***N_{bad}*** is the number of smelly functions and ***N*** is the number of functions in the software.

In this embodiment, the code smell rate indicator measures the frequency of defects that occur in the software. The higher the indicator value, the higher the frequency of defects appearing in the software.

In some embodiments, the defect rate refers to the frequency of occurrence of software defects, and the specific detection of software defects depends on the detection results of other tools. Therefore, in this embodiment, a defect detection result is obtained, and the defect rate is calculated based on the defect detection result. The defect rate includes a rate of defects per thousand lines, a defect density, a file pass rate, and a function pass rate, etc.

For example, the rate of defects per thousand lines is obtained based on the number of defects in the defect detection result. For example, number of defects per thousand lines = number of defects/KLOC, where KLOC refers to thousand lines of code, and number of defects per thousand lines of code refers to the number of defects that occur per thousand lines of code.

For another example, the defect density is obtained based on a number of defects of each defect type and a weight of the each defect type in the defect detection result. For example, defect density=(∑defect type weight x number of defects of this type)/KLOC, where defect types include, for example, code redundancy, interface defects, functional defects, robustness defects, etc. The defect density refers to the number of defects calculated by weighting each defect type.

For example, a file defect rate can be obtained based on a ratio of the number of files with defects in the defect detection result to the number of files. For example, the file defect rate = the number of files with defects / the number of files X 100%. The file defect rate refers to the proportion of files with defects in the total number of files.

For example, a function defect rate is obtained based on the ratio of the number of functions with defects in the defect detection result to the first function number. For example, the function defect rate = the number of functions with defects / the total number of functions X 100%. The function defect rate refers to the proportion of functions with defects in the total number of functions.

The calculation results of the four types of defect rates above have different focuses and can provide a more systematic and comprehensive assessment of the software from different perspectives.

In the above embodiment, software quality is assessed from both internal and external aspects, which improves the comprehensiveness and accuracy of software assessment.

In this embodiment, software design recovery is performed from C/C++ source code. First, a control flow graph and a multilevel call graph are recovered, and these graphical structures enable an intuitive and deep understanding of the software design. Then, based on these recovered software designs, information extraction is performed to accurately obtain various key information, such as function call relationships. Thereafter, through in-depth analysis of the extracted information, a comprehensive assessment of the quality of the software design is performed. This assessment process focuses not only on internal indicators, but also on external indicators that measure the behavior performance of the software design. This makes the assessment of the software design more comprehensive and accurate.

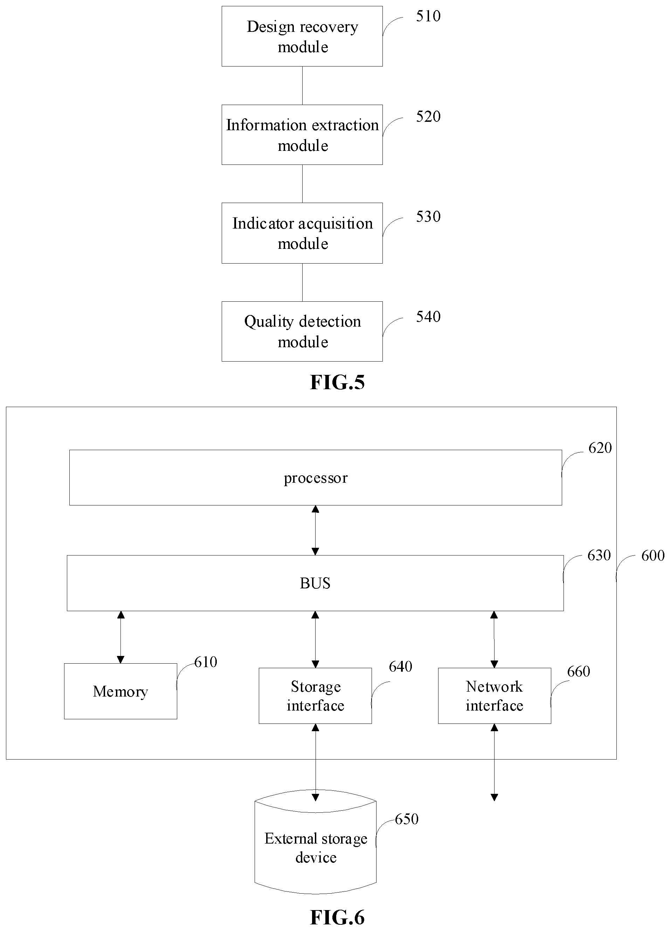

FIG. 5 is a schematic structure diagram of a software quality detection system according to some embodiments of the present disclosure, which includes a design recovery module 510, an information extraction module 520, an indicator acquisition module 530, and a quality detection module 540.

The design recovery module 510 is configured to analyze software program source code to construct a control flow graph, a procedure-level call graph, and a file-level call graph.

In some embodiments, an intermediate control flow graph is generated based on the software program source code. Node contents in the intermediate control flow graph are replaced with the software program source code, and conversion control conditions are added on edges in the intermediate control flow graph to generate the control flow graph.

In some embodiments, an abstract syntax tree is constructed based on the software program source code; function declaration nodes in the abstract syntax tree are searched to obtain function declaration information of each function, and function call nodes are searched to obtain function call information of the each function; a unique identifier of the each function is constructed based on the function declaration information of the each function; each function node is constructed based on the unique identifier of the each function; and a procedure-level call graph is constructed based on the each function node and the function call information of the each function.

In some embodiments, file nodes are obtained based on function nodes belonging to a same file in the procedure-level call graph; file call information is obtained based on the function call information of the each function in the file nodes; and the file-level call graph is constructed based on the file call information.

The information extraction module 520 is configured to extract a plurality of metrics based on the software program source code, the control flow graph, the procedure-level call graph, and the file-level call graph.

In some embodiments, the plurality of metrics include one or more of a first function number in the software, a second function number of functions with annotations, an out-degree and an in-degree of the each function, an interface number, a third function number of smelly functions, and a file number.

For example, the first function number and the second function number are obtained based on the software program source code; the out-degree and in-degree of the each function are obtained based on the procedure-level call graph; the interface number and the file number are obtained based on the file-level call graph; and the third function number is obtained based on the software program source code, the control flow graph, the procedure-level call graph, and the file-level call graph.

In some embodiments, information extraction is performed on the software program source code based on AST-Matcher rules to obtain the plurality of metrics.

The indicator acquisition module 530 is configured to obtain internal indicator and external indicator related to software quality detection using a plurality of measurement functions based on the plurality of metrics.

In some embodiments, the internal indicator includes at least one of a modifiability indicator, a scalability indicator, a testability indicator, a replaceability indicator, or an understandability indicator; and the external indicator includes at least one of a code smell rate indicator or a defect rate indicator.

For example, a number of other functions associated with the each function is obtained based on a sum of the out-degree and the in-degree of the each function; the modifiability indicator is obtained based on a sum of the number of other functions associated with the each function, and the first function number.

The scalability indicator is obtained based on a ratio of the interface number to the first function number.

The out-degrees of the each function are added up to obtain a number of other functions that need to be called to test all the functions; and the testability indicator is obtained based on the number of other functions that need to be called to test all the functions and the first function number.

A replaceability is obtained of the each function based on the in-degree of the each function; and the replaceability indicator is obtained based on a sum of the replaceabilities of the each function and the first function number.

The understandability indicator is obtained based on a ratio of the second function number to the first function number.

The code smell rate indicator is obtained based on a ratio of the third function number to the first function number.

The defect rate includes at least one of a rate of defects per thousand lines, a defect density, a file pass rate, and a function pass rate.

For example, the rate of defects per thousand lines is obtained based on the number of defects in the defect detection result; the defect density is obtained based on a number of defects of each defect type and a weight of the each defect type in the defect detection result; a file defect rate is obtained based on a ratio of a number of files with defects in the defect detection result to the file number; and a function defect rate is obtained based on a ratio of the number of functions with defects in the defect detection result to the first function number.

The quality detection module 540 is configured to inspect software quality based on the internal indicator and external indicator.

In some embodiments, it is determined whether the software design meets some expected quality standards, and if not, software design refactoring is performed.

In the above embodiments, software design structures can be identified without the need for specific SRE tools, and then internal and external indicators related to software quality detection can be extracted from the source code and software design structures. Software quality is comprehensively assessed in both internal and external aspects, thereby improving the universality, accuracy and comprehensiveness of software quality detection.

FIG. 6 is a schematic structure diagram of a software quality detection system according to other embodiments of the present disclosure. The software quality detection system 600 comprises a memory 610 and a processor 620. Wherein the memory 610 may be a magnetic disk, flash memory or any other non-volatile storage medium. The memory 610 is configured to store instructions of the above embodiment. The processor 620 is coupled to the memory 610 and may be implemented as one or more integrated circuits, such as a microprocessor or microcontroller. The processor 620 is configured to execute the instructions stored in the memory.

In some embodiments, the processor 620 is coupled to the memory 610 via a bus 630. The software quality detection system 600 may be further connected to an external storage device 650 through a storage interface 640 to access external data, and may be further connected to a network or another computer system (not shown) through a network interface 660, which will not be described in detail herein.

In this embodiment, data instructions are stored via a memory and subsequently processed by a processor, thereby reducing reliance on specific tools, increasing the accuracy of the model, and improving the comprehensiveness of the software design quality assessment.

In the embodiment of this disclosure, software design recovery is performed from a C/C++ project, followed by information extraction from source code, actual designs, and documents. Finally, a comprehensive quality indicator system for C, C++, and mixed C/C++ software designs is constructed to perform a comprehensive software design quality assessment. This disclosure helps not only to understand and analyze the design of existing projects, but also provides powerful guidance for improving and optimizing software design.

In other embodiments, there is provided a computer-readable storage medium stored thereon computer program instructions that, when executed by a processor, implement the steps of the method of the above embodiment. One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

According to some embodiments of the present disclosure, there is further provided a computer program, comprising: instructions that, when executed by a processor, cause the processor to perform the software quality detection method described above.

Heretofore, the present disclosure has been described in detail. In order to avoid obscuring the concepts of the present disclosure, some details known in the art are not described. Based on the above description, those skilled in the art can understand how to implement the technical solutions disclosed herein.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A software quality detection method, comprising:
analyzing software program source code to construct a control flow graph, a procedure-level call graph, and a file-level call graph;
extracting a plurality of metrics based on the software program source code, the control flow graph, the procedure-level call graph, and the file-level call graph;
obtaining internal indicator and external indicator related to software quality detection using a plurality of measurement functions based on the plurality of metrics; and
detecting software quality based on the internal indicator and external indicator.

2. The software quality detection method according to claim 1, wherein constructing the control flow graph comprises:
generating an intermediate control flow graph based on the software program source code; and
replacing node contents in the intermediate control flow graph with the software program source code, and adding conversion control conditions on edges in the intermediate control flow graph to generate the control flow graph.

3. The software quality detection method according to claim 1 or 2, wherein constructing the procedure-level call graph comprises:
constructing an abstract syntax tree based on the software program source code;
searching for function declaration nodes in the abstract syntax tree to obtain function declaration information of each function, and searching for function call nodes to obtain function call information of the each function;
constructing a unique identifier of the each function based on the function declaration information of the each function;
constructing each function node based on the unique identifier of the each function; and
constructing the procedure-level call graph based on the each function node and the function call information of the each function.

4. The software quality detection method according to claim 3, wherein constructing the file-level call graph comprises:
obtaining file nodes based on function nodes belonging to a same file in the procedure-level call graph;
obtaining file call information based on the function call information of the each function in the file nodes; and
constructing the file-level call graph based on the file call information.

5. The software quality detection method according to any one of claims 1 to 4, wherein the plurality of metrics comprise one or more of a first function number in the software, a second function number of functions with annotations, an out-degree and an in-degree of the each function, an interface number, a third function number of smelly functions, and a file number.

6. The software quality detection method according to claim 5, wherein:
the internal indicator comprises at least one of a modifiability indicator, a scalability indicator, a testability indicator, a replaceability indicator, or an understandability indicator; and
the external indicator comprises at least one of a code smell rate indicator or a defect rate indicator.

7. The software quality detection method according to claim 6, wherein obtaining the modifiability indicator comprises:
obtaining a number of other functions associated with the each function based on a sum of the out-degree and the in-degree of the each function; and
obtaining the modifiability indicator based on a sum of the number of other functions associated with the each function, and the first function number.

8. The software quality detection method according to claim 6 or 7, wherein obtaining the scalability indicator comprises:
obtaining the scalability indicator based on a ratio of the interface number to the first function number.

9. The software quality detection method according to any one of claims 6 to 8, wherein obtaining the testability indicator comprises:
adding up the out-degrees of the each function to obtain a number of other functions that need to be called to test all the functions; and
obtaining the testability indicator based on the number of other functions that need to be called to test all the functions and the first function number.

10. The software quality detection method according to any one of claims 6 to 9, wherein obtaining the replaceability indicator comprises:
obtaining a replaceability of the each function based on the in-degree of the each function; and
obtaining the replaceability indicator based on a sum of the replaceabilities of the each function and the first function number.

11. The software quality detection method according to any one of claims 6 to 10, wherein obtaining the understandability indicator comprises:
obtaining the understandability indicator based on a ratio of the second function number to the first function number.

12. The software quality detection method according to any one of claims 6 to 11, wherein obtaining the code smell rate indicator comprises:
obtaining the code smell rate indicator based on a ratio of the third function number to the first function number.

13. The software quality detection method according to any one of claims 6 to 12, wherein the defect rate comprises at least one of a rate of defects per thousand lines, a defect density, a file pass rate, or a function pass rate.

14. The software quality detection method according to claim 13, further comprising obtaining a defect detection result, wherein obtaining the defect rate comprises at least one of:
obtaining the rate of defects per thousand lines based on a number of defects in the defect detection result;
obtaining the defect density based on a number of defects of each defect type and a weight of the each defect type in the defect detection result;
obtaining a file defect rate based on a ratio of a number of files with defects in the defect detection result to the file number; or
obtaining a function defect rate based on a ratio of a number of functions with defects in the defect detection result to the first function number.

15. The software quality detection method according to any one of claims 5 to 14, wherein extracting the plurality of metrics comprises:
obtaining the first function number and the second function number based on the software program source code;
obtaining the out-degree and in-degree of the each function based on the procedure-level call graph;
obtaining the interface number and the file number based on the file-level call graph; and
obtaining the third function number based on the software program source code, the control flow graph, the procedure-level call graph, and the file-level call graph.

16. The software quality detection method according to any one of claims 1 to 15, wherein extracting the plurality of metrics based on the software program source code comprises:
extracting information from the software program source code based on AST-Matcher rules to obtain the plurality of metrics.

17. A software quality detection system, comprising:
a design recovery module configured to analyze software program source code to construct a control flow graph, a procedure-level call graph, and a file-level call graph;
an information extraction module configured to extract a plurality of metrics based on the software program source code, the control flow graph, the procedure-level call graph, and the file-level call graph;
an indicator acquisition module configured to obtain internal indicator and external indicator related to software quality detection using a plurality of measurement functions based on the plurality of metrics; and
a quality detection module configured to inspect software quality based on the internal indicator and external indicator.

18. A software quality detection system, comprising:
a memory; and
a processor coupled to the memory, the processor configured to, based on instructions stored in the memory, carry out the software quality detection method according to any one of claims 1 to 16.

19. A computer-readable storage medium stored thereon computer program instructions that, when executed by a processor, implement the software quality detection method according to any one of claims 1 to 16.

20. A computer program, comprising:
instructions that, when executed by a processor, cause the processor to perform the software quality detection method according to any one of claims 1 to 16.
